Europäisches Patentamt

**European Patent Office**

**Office européen des brevets**

(19)

(11) Numéro de publication: **0 139 564**
**A1**

(12)

# DEMANDE DE BREVET EUROPEEN

(21) Numéro de dépôt: **84401874.7**

(22) Date de dépôt: **21.09.84**

(51) Int. Cl.⁴: **G 09 B 1/06**

(30) Priorité: **22.09.83 FR 8315070**

(43) Date de publication de la demande:
**02.05.85 Bulletin 85/18**

(84) Etats contractants désignés:
**AT BE CH DE GB IT LI LU NL SE**

(71) Demandeur: **SCHERING**
**ZI de Roubaix Est Rue de Toufflers**
**F-59390 Lys-lez-Lannoy(FR)**

(72) Inventeur: **Bouchery, Jean-Paul Ernest**
**356, Bois d'Achelles**
**F-59200 Tourcoing(FR)**

(74) Mandataire: **Casanova, André et al,**
**CABINET ARMENGAUD JEUNE CASANOVA et**
**LEPEUDRY 23 boulevard de Strasbourg**
**F-75010 Paris(FR)**

(54) **Matériel pédagogique portatif.**

(57) Matériel pédagogique portatif pouvant être utilisé notamment pour présenter des sujets biologiques.

Le matériel est constitué, d'une part, de deux volets (1) et (2) articulés l'un par rapport à l'autre, au moins l'un (2) de ces volets comportant au moins sur la face (3) en regard de l'autre (1) volet une représentation graphique (4) du sujet à exposer, et, d'autre part, d'éléments (5) relatifs à cette représentation graphique qui, en coopérant avec des moyens situés sur au moins un des volets, permettent la reconstitution de cette représentation graphique (4) et/ou d'en montrer une évolution.

Application à l'enseignement.

Fig.1

La présente invention est relative à un matériel pédagogique portatif pouvant être utilisé notamment lors de séances d'information ou d'enseignement en petits groupes sur des sujets relevant des sciences de la nature et plus particulièrement des sciences biologiques.

Parmi tous les matériels pédagogiques mis à la disposition des enseignants et conférenciers, il est connu que le tableau noir constitue l'outil pédagogique de base, mais malheureusement n'est guère un outil portatif. Parmi les matériels pédagogiques portatifs, beaucoup sont relativement encombrants ou ne permettent guère des présentations synoptiques. Ainsi, lorsque l'on veut présenter une succession d'évènements biologiques, il n'existe pas de matériel portatif permettant de mettre simultanément sous les yeux de l'auditoire les évènements original et final : une telle présentation est considérée par la plupart des pédagogues comme essentielle lorsque l'on s'adresse à des adultes et ce quelle que soit leur culture.

Aussi, un des buts de la présente invention est-il de fournir un matériel pédagogique portatif qui permet un exposé dynamique dont les différentes étapes peuvent rester simultanément présentes sous les yeux de l'auditoire.

Un autre but de cette invention est de fournir un tel matériel dont la mise en oeuvre est très proche de celle du tableau noir.

Un but supplémentaire de l'invention est de fournir un matériel pédagogique portatif d'un coût faible et d'une grande robustesse.

Ces buts, ainsi que d'autres qui apparaîtront par la suite, sont atteints par un matériel pédagogique portatif qui, selon la présente invention, est constitué, et d'une part, de deux volets articulés l'un par rapport à l'autre, au moins l'un de ces volets comportant au moins sur la face en regard de l'autre volet, une représentation graphique du sujet à exposer, et, d'autre part, des éléments relatifs à cette représentation graphique qui, en coopérant avec des moyens situés sur au moins un des volets, permettent la reconstitution de cette représentation graphique et/ou d'en montrer une évolution.

Selon un mode de réalisation préférée de la présente invention, au moins un des volets ainsi que les éléments de la représentation graphique sont aimantés.

Avantageusement, les éléments sont à une échelle plus grande que celle de la représentation graphique.

De préférence, le volet comportant la représentation graphique n'est pas aimanté.

Selon un autre mode de réalisation de l'invention, ce matériel pédagogique portatif comprend également des moyens pour présenter des fiches amovibles. Dans ce cas, ce matériel peut également comporter sur un de ses volets, un casier pour ranger de telles fiches.

La description qui va suivre et qui ne présente aucun caractère limitatif, doit être lue en regard des figures annexées parmi lesquelles :

- la figure 1 représente, en perspective, un matériel pédagogique portatif selon la présente invention, en position semi-ouverte.

- la figure 2 est vue en plan d'éléments relatifs à la représentation graphique portée par un des volets de ce matériel.

Ainsi qu'on peut le voir sur ces figures, un matériel pédagogique portatif conforme à la présente invention est constitué de deux volets 1 et 2 articulés l'un par rapport à l'autre, par exemple au moyen de charnières : ces deux volets 1 et 2 peuvent ainsi se rabattre l'un contre l'autre et être maintenus dans cette position par tout moyen convenable. Un des volets, selon cet exemple de réalisation, le volet 2, comporte, sur sa face 3 en regard du volet 1, une représentation graphique 4, une fleur dans le cas présent.

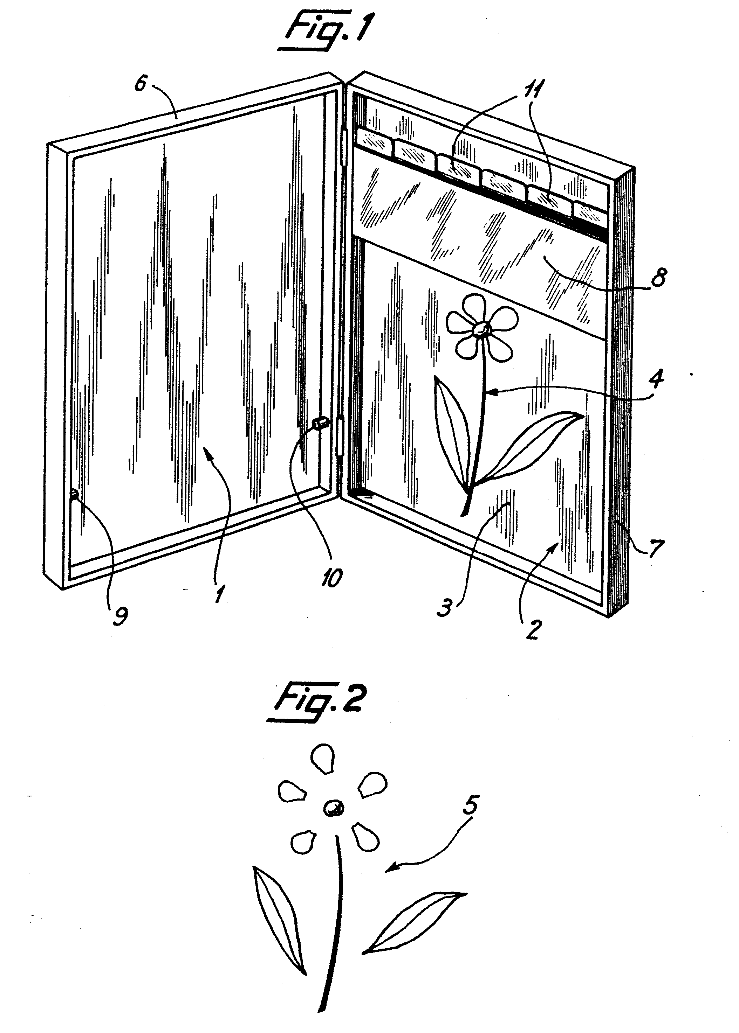

Ce matériel pédagogique est également constitué d'éléments, désignés dans leur ensemble par la référence 5 (figure 2), relatif à cette représentation graphique. Selon cet exemple de réalisation, les éléments 6 représentent les différentes pièces de la plante et de la fleur. Ces éléments 5 en coopérant avec des moyens dont est muni par exemple le volet 1, permettent de reconstituer la plante et la fleur au fur et à mesure de la description de celles-ci.

Ainsi, le volet 1, peut être métallique et les éléments 5 magnétiques, ou le contraire. Dans le cas de certaines applications, il peut être avantageux que le volet comprenant la représentation graphique soit également métallique : la représentation graphique joue ainsi le rôle d'un patron.

Les éléments 5 peuvent être, soit à la même échelle que la représentation graphique ou à une échelle plus grande, voire même plus petite.

Les deux volets 1 et 2 peuvent être pris, soit les deux, soit l'un seulement dans un cadre respectivement 6 et 7 ; lorsque les deux volets sont rabattus l'un contre l'autre, un espace est délimité dans lequel peuvent être disposés les éléments 5 lors du transport de ce matériel, par exemple.

Pour certaines applications pédagogiques, il peut être nécessaire de disposer de fiches 11. Dans ce cas celles-ci peuvent être placées dans un casier 8, situé par exemple à la partie supérieure du volet 2. Pour présenter ces fiches 11, on les dispose en bas du volet 1 de façon qu'elles soient maintenues par la partie inférieure du cadre 6 et deux butées 9 et 10 disposées à hauteur convenable sur les parties verticales de ce cadre.

Bien entendu, on peut également disposer sur les autres faces des volets 1 et 2, d'autres représentations graphiques soit qu'elles concernent directement le sujet exposé, soit qu'elles l'annoncent.

Selon une autre forme de réalisation, le volet comportant la ou les représentations graphiques peut être remplacé par un autre : le volet 2 est ainsi rendu amovible par des moyens connus et peut être remplacé par un autre ou en dévoiler un autre lorsqu'on le retire de son cadre 7.

4

Ainsi qu'on peut aisément le comprendre, un tel matériel pédagogique est particulièrement adapté à la représentation de sujets biologiques ou tout au moins appartenant aux sciences naturelles, bien que cela ne constitue nullement une limitation.

Notamment, ce matériel peut constituer un outil pédagogique précieux dans le cadre de l'éducation sexuelle. Dans cet exemple d'application, le volet 2 comporte sur sa face en regard du volet 1, une coupe de l'appareil génital féminin et sur son autre face celle de l'appareil génital masculin. Quant aux éléments 5, ils se rapportent à l'appareil génital féminin : ils permettent d'en représenter les différents stades physiologiques et d'expliquer les différentes méthodes contraceptives.

REVENDICATIONS

1.- Matériel pédagogique portatif constitué de deux volets (1) et (2) articulés l'un par rapport à l'autre, caractérisé par le fait qu'au moins l'un (2) desdits volets comporte au moins sur la face (3) en regard de l'autre (1) volet, une représentation graphique (4) du sujet à exposer, et que ledit matériel comprend en outre des éléments (5) relatifs à ladite représentation graphique qui, en coopérant avec des moyens situés sur au moins un des volets, permettent la reconstitution de ladite représentation graphique (4) et/ou d'en montrer une évolution.

2.- Matériel selon la revendication 1, caractérisé en ce qu'au moins un desdits volets (1,2) ainsi que lesdits éléments (5) sont aimantés.

3.- Matériel selon l'une quelconque des revendications 1 ou 2, caractérisé en ce que lesdits éléments (5) sont à une échelle plus grande que celle de ladite représentation graphique (4).

4.- Matériel selon l'une quelconque des revendications 1 à 3, caractérisé en ce que le volet (2) comportant ladite représentation graphique n'est pas aimanté.

5.- Matériel selon l'une quelconque des revendications 1 à 4, caractérisé en ce qu'il comprend également des moyens pour présenter des fiches amovibles (11).

6.- Matériel selon la revendication 5, caractérisé en ce qu'il comporte un casier (8) pour ranger lesdites fiches (11).

*Fig.1*

*Fig.2*

Office européen
des brevets

**RAPPORT DE RECHERCHE EUROPEENNE**

EP  84 40 1874

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 685 170  (FAIRLEIGH) <br> * Figures 1-6; colonne 2, lignes 9-68;  colonne  3;  colonne  4, lignes 1-42 * | 1-4,6 | G 09 B    1/06 |
| | --- | | |
| X | NL-A-6 902 456  (VERMANDE ZONEN N.V.) <br> *   Figures   1,2;   page   5, revendications 1,3 * | 1,3-6 | |
| | --- | | |
| A | US-A-4 127 948  (MATTEL INC.) <br> * Figures  2,11-13;  colonne  3, lignes  19-35;  colonne 6, lignes 33-68; colonne 7, lignes 1-15 * | 1,4 | |
| | ----- | | |

DOMAINES TECHNIQUES
RECHERCHES (Int. Cl.4)

G 09 B

Le présent rapport de recherche a été établi pour toutes les revendications

| Lieu de la recherche <br> LA HAYE | Date d'achèvement de la recherche <br> 13-12-1984 | Examinateur <br> ALLEN E.F. |
|---|---|---|